## Europäisches Patentamt
## European Patent Office
## Office européen des brevets

(11) Veröffentlichungsnummer: **0 033 765**
**B1**

(12) ## EUROPÄISCHE PATENTSCHRIFT

(45) Veröffentlichungstag der Patentschrift :
16.11.83

(51) Int. Cl.³ : **F 16 C  7/02, B 32 B  17/04**

(21) Anmeldenummer : **80107002.0**

(22) Anmeldetag : **13.11.80**

(54) **Pleuelstange aus Verbundwerkstoff.**

(30) Priorität : **08.02.80 DE 3004575**

(43) Veröffentlichungstag der Anmeldung :
**19.08.81 Patentblatt 81/33**

(45) Bekanntmachung des Hinweises auf die Patenterteilung : **16.11.83 Patentblatt 83/46**

(84) Benannte Vertragsstaaten :
**FR GB IT**

(56) Entgegenhaltungen :
**DE A 2 360 410**
**DE A 2 733 495**
**GB A 1 162 022**
**GB A 1 324 898**
**GB A 1 364 317**
**US A 3 262 335**
**US A 3 411 379**

(73) Patentinhaber : **SIGRI ELEKTROGRAPHIT GMBH**
**Werner von Siemens-Strasse 18**
**D-8901 Meitingen (DE)**

(72) Erfinder : **Swozil, Adolf, Ing. grad.**
**Schlossbergweg 112**
**D-8851 Kühlenthal (DE) ·**

Jouve, 18, rue St-Denis, 75001 Paris, France

EP 0 033 765 B1

## Pleuelstange aus Verbundwerkstoff

Die Erfindung betrifft eine Pleuelstange aus einem Verbundwerkstoff mit einem aus den Verstärkungsfasern gebildeten Gurt.

Faserverstärkte Bauteile sind wegen des günstigen Verhältnisses von Festigkeit und Elastizitätsmodul zur Masse des Bauteils für verschiedene Verwendungszwecke vorgeschlagen worden. Die Vorteile sind besonders gewichtig, wenn die Teile Beschleunigungskräften unterliegen. Durch die GB-A-1 364 317 ist eine Pleuelstange bekanntgeworden, die aus einem U-förmigen faserverstärkten Stab und zwei Endstücke in Form eines Pleuelauges und eines Pleuelkopfes besteht, die mit den Enden des Stabs verklammert sind. Für Zug- und Torsionsstäbe aus faserverstärkten Kunstharzen ist schließlich eine Lösung bekannt, bei welcher die Faserverstärkung in Form geschlossener Bänder angeordnet ist (US-A-3 411 379). Generelle Nachteile faserverstärkter Kunstharze sind die vergleichsweise weniger günstige Beständigkeit gegen korrosive Stoffe und die oftmals unzulängliche Härte. Die Beschränkungen gelten besonders auch für Pleuelstangen aus Verbundwerkstoffen, die heißen Ölen, Öldämpfen und Öllegierungsstoffen ausgesetzt sind. Die Einwirkung dieser Stoffe auf die Kunstharzmatrix des Verbundwerkstoffs führt unter anderem zu einer Verringerung der Wechselfestigkeit, die auch ohne die chemischen Prozesse aus geometrischen Gründen unzureichend sein kann.

Zum Schutz der Oberfläche von Körpern aus einem Verbundwerkstoff mit einer einfachen Querschnittsform ist beispielsweise durch die GB-PS 1 515 104 bekannt, die Körper mit einer Nickelplattierung zu versehen. Wegen der komplexen Form und der Größe der an dem Bauteil anliegenden Wechselspannungen sind derartige Plattierungen der Pleuelstangen weniger geeignet und der Erfindung liegt daher die Aufgabe zugrunde, eine Pleuelstange aus einem Verbundwerkstoff zu schaffen, die gegen heiße Öle und Öldämpfe beständig ist, eine bessere Wechselfestigkeit aufweist und ein günstiges Festigkeits/Masse-Verhältnis hat.

Die Aufgabe wird erfindungsgemäß mit einer Pleuelstange der genannten Art dadurch gelöst, daß

a) der Gurt in Form einer Endlosschlaufe gewickelt ist,

b) die Endlosschlaufe bezogen auf die Fasererstreckung eine konstante Querschnittsfläche und veränderliche Querschnittsformen aufweist,

c) der Gurt von einem Mantel aus Aluminium umschlossen ist.

Bei der erfindungsgemäßen Pleuelstange schirmt der Aluminiummantel die Oberfläche des Verbundwerkstoffs gegen Öl und Öldämpfe ab, so daß eine chemische Schädigung der Kunstharzmatrix ausgeschlossen ist. Da die thermischen Ausdehnungskoeffizienten des faserverstärkten Verbundwerkstoffs und des Aluminiums verschieden sind, entstehen beim Erwärmen der Pleuelstange auf die Anwendungstemperatur in dem Verbundwerkstoff Zugspannungen und in dem damit kraftschlüssig verbundenen Mantel Druckspannungen. Diese Spannungsverteilung ist werkstoffgerecht und verbessert vor allem die Wechselfestigkeit der Pleuelstange. Die Masse der Pleuelstange beträgt dabei nur 40 bis 60 % einer entsprechenden Stange aus Metall, so daß auch die Massenkräfte bei einer erfindungsgemäßen Pleuelstange wesentlich kleiner als bei den bekannten Ausführungen sind.

Nach einer bevorzugten Ausbildung der Erfindung ist der Gurt U-förmig ausgebildet und die freien Schenkel weisen augenförmige Durchbrechungen auf. Ein aus Pleuelauge, Pleuelschaft und einen Teil des Pleuelkopfes, in dem der durchbrochene Teil der Endlosschlaufe angeordnet ist, gebildeter Teil des Pleuels, ist bei dieser Ausführungsform mit dem anderen im wesentlichen halbschaligen Teil des Pleuelkopfes verschraubt, wobei Dehnungsschrauben durch die Durchbrechungen geführt sind. Als Verstärkungsfasern für die erfindungsgemäße Pleuelstange sind besonders Kohlenstoffasern geeignet, die eine vergleichsweise hohe Festigkeit und einen großen Elastizitätsmodul aufweisen. Unter dem Terminus Kohlenstoffasern sind ebenfalls Graphitfasern zu verstehen. Nach einer anderen Ausführung weisen die radial inneren Fasern einen kleineren Elastizitätsmodul als die außen liegenden Fasern auf. In diesem Fall sind die inneren Fasern des Faserbündels Glasfasern und die äußeren Fasern Kohlenstoffasern. Als Matrix des Verbundwerkstoffs eignen sich besonders Epoxidharze, wenngleich auch andere thermisch belastbare Harze nicht ausgeschlossen sind, z. B. Formaldehydharze oder auch Polyimidharze.

Der den Verbundwerkstoffteil der Pleuelstange umschließende Aluminiummantel weist bevorzugt eine veränderliche Wandstärke über die Länge der Pleuelstange auf, wobei die Wandstärke dem tatsächlichen Spannungsverlauf angepaßt ist. Der Mantel besteht zweckmäßig aus mehreren flüssigkeitsdicht verbundenen Teilen, bevorzugt aus zwei miteinander flüssigkeitsdicht verbundenen Teilen.

Zum Herstellen einer erfindungsgemäßen Pleuelstange werden Verstärkungsfasern in Form von Filamentbündeln durch ein flüssiges Kunstharz oder eine Kunstharzlösung bewegt und dabei mit einem dünnen Kunstharzfilm beschichtet. Die beschichteten Fasern werden in bekannter Weise als Endlosschleife auf einen Wickelkern aufgewickelt und im Harz enthaltene Lösungsmittel durch leichtes Erwärmen entfernt. Bei der Verwendung eines mehrere Fasersorten enthaltenden Verbundwerkstoffs wickelt man die einzelnen Fasersorten nacheinander auf den Dorn, z. B. zunächst eine Schicht Glasfasern, die nach dem Formen des Wickelkörpers die Innenseite des Formlings bildet, und darauf eine Schicht Kohlenstoffasern. Das Verhältnis Glas-/ Kohlenstoffasern beträgt im allgemeinen 1 : 1 bis 1 : 2. Der Wickelkern wird dann in eine Preßform eingelegt, durch Pressen verdichtet und in die Form der Pleuelstange gebracht. In dem Preßkörper sind die Fasern spannungsgerecht orientiert und die Querschnittsform des Preßlings ist den sich über die Länge der Pleuelstange ändernden Spannungen angepaßt. Nach Aushärten des Harzes wird der Formling formschlüssig in eine wenigstens aus zwei Teilen bestehende Aluminiumform eingelegt und mit der Form, beispielsweise durch einen Kunstharzkleber kraftschlüssig verbunden. Die Teile der Aluminiumform werden dann, zweckmäßig mit einem ölbeständigen Kleber auf Kunstharzbasis, flüssigkeitsdicht miteinander verbunden, wodurch der Verbundwerkstoff mantelförmig umschlossen wird.

Die Erfindung wird im folgenden durch Zeichnungen beispielhaft erläutert. Es zeigen :

Figur 1  eine Aufsicht auf einen Wickelkörper ;

Figur 2  einen Schnitt durch den Wickelkörper nach Fig. 1 längs der Linie II-II ;

Figur 3  einen Längsschnitt einer Pleuelstange ; und

Figur 4  einen Schnitt längs der Linie IV-IV in Fig. 3.

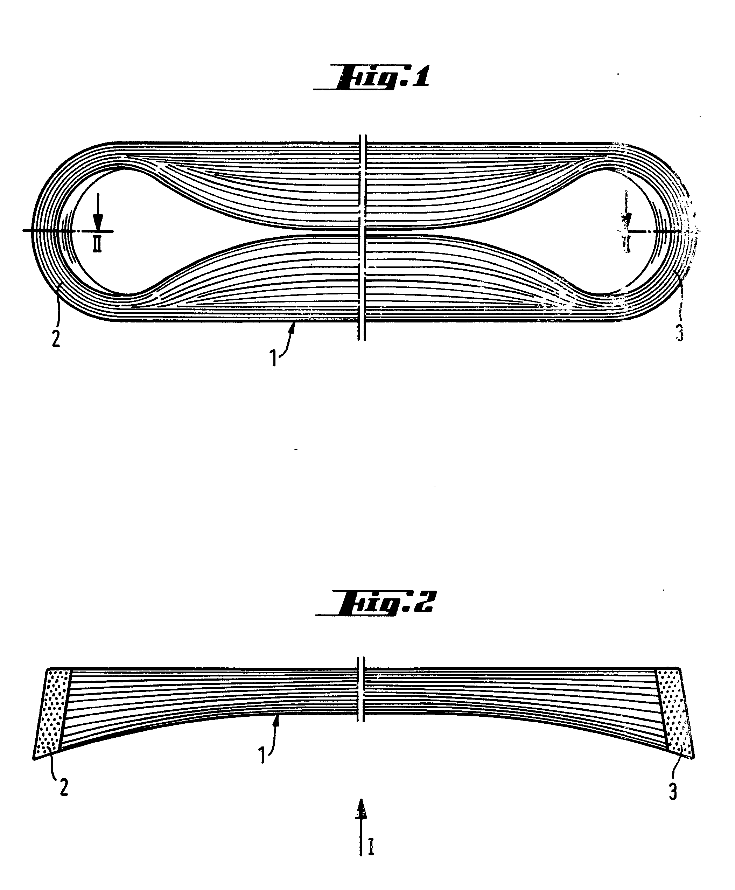

Fig. 1 und 2 zeigen einen Wickelkörper 1 in Form einer Endlosschlaufe mit den Scheitelzonen 2 und 3, der eine konstante Querschnittsfläche und eine sich ändernde Querschnittsform aufweist. Im besonderen nimmt die Breite der Längsschenkel zu den Scheitelzonen hin ab und entsprechend der verringerten Breite wächst die Dicke des Körpers in Richtung der Scheitelzonen. Die aus Faserverbundwerkstoff mit unidirektionalem Faserverlauf bestehende Endlosschlaufe wird wie oben beschrieben durch Pressen in die Form einer Pleuelstange gebracht, zum Aushärten der Harzmatrix erwärmt und mit einem Mantel 4 aus Aluminium umschlossen.

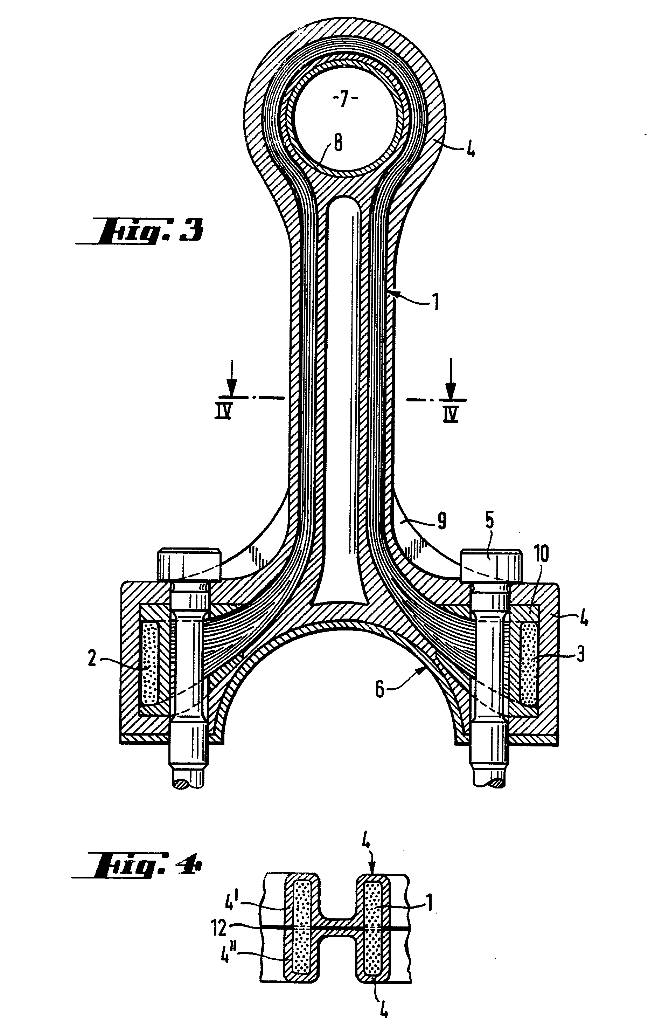

Die Fig. 3 und 4 zeigen eine Pleuelstange mit einem verformten Wickelkörper 1 und einem den Wickelkörper flüssigkeitsdicht umschließenden zweiteiligen Aluminiummantel 4, der im Bereich des Pleuelkopfes eine rippenförmige Verbreiterung 9 aufweist. Die schlaufenförmigen Scheitelzonen 2, 3 des Wickelkörpers liegen im Bereich des Pleuelkopfes und weisen Durchbrechungen auf, in die Dehnungsschrauben 5 geführt sind. Der untere Teil des Pleuelkopfes und die Verbindung des unteren Teils mit dem Hauptteil der Pleuelstange sind zeichnerisch nicht dargestellt. Die Lagerschale 6 besteht aus Stahl oder einer anderen Metallegierung. Das Füllstück 10 vermeidet schroffe Querschnittsänderungen des Wickelkörpers. Das Pleuelauge 7 ist vollständig aus dem ummantelten Verbundwerkstoff ausgeführt und weist eine Lagerbuchse 8 auf. Die beiden Aluminiummantelhälften 4' und 4'' sind in der Zone 12 miteinander flüssigkeitsdicht verbunden.

In dem Verbundwerkstoffkern der Pleuelstange verlaufen die Verstärkungsfasern parallel zu den Beanspruchungsrichtungen ; die Stärke des Aluminiummantels 4 korrespondiert mit der Größe der anliegenden Spannung. Die durch Erwärmen der Pleuelstange auf Betriebstemperatur im Kern und im Mantel entstehenden Vorspannungen bewirken schließlich, daß bei den wechselnden Belastungen, denen eine Pleuelstange ausgesetzt ist, der Verbundwerkstoffkern ausschließlich mit Zug-Schwell-Spannungen und der Aluminiummantel 4 ausschließlich mit Druck-Schwell-Spannungen beaufschlagt wird. Die Ausnutzung des Werkstoffs ist bei der erfindungsgemäßen Pleuelstange entsprechend sehr günstig.

## Ansprüche

1. Pleuelstange aus einem Verbundwerkstoff mit einem aus den Verstärkungsfasern gebildeten Gurt, dadurch gekennzeichnet, daß

a) der Gurt in Form einer Endlosschlaufe gewickelt ist,

b) die Endlosschlaufe bezogen auf die Faserstreckung eine konstante Querschnittsfläche und veränderliche Querschnittsformen aufweist,

c) der Gurt von einem Mantel aus Aluminium umschlossen ist.

2. Pleuelstange nach Anspruch 1, dadurch gekennzeichnet, daß der Gurt U-förmig ausgebildet ist und die freien Schenkel augenförmige Durchbrechungen aufweisen.

3. Pleuelstange nach den Ansprüchen 1 und 2, dadurch gekennzeichnet, daß als Verstärkungsfaser Kohlenstoffasern verwendet sind.

4. Pleuelstange nach den Ansprüchen 1 bis 3, dadurch gekennzeichnet, daß die inneren Fasern Glasfasern und die äußeren Fasern Kohlenstoffasern sind.

5. Pleuelstange nach den Ansprüchen 1 bis 4, dadurch gekennzeichnet, daß der Aluminiummantel über die Länge der Pleuelstange eine veränderliche Wandstärke aufweist.

6. Pleuelstange nach den Ansprüchen 1 bis 5, dadurch gekennzeichnet, daß der Aluminiummantel aus zwei flüssigkeitsdicht miteinander verbundenen Teilen besteht.

7. Verfahren zum Herstellen einer Pleuelstange nach den Ansprüchen 1 bis 6, dadurch gekennzeichnet, daß mit einem härtenden Kunstharz beschichtete Verstärkungsfasern in Form einer Endlosschlaufe auf einen Wickelkern gewickelt werden, der Wickelkörper durch Pressen in eine der Querschnittsform der Pleuelstange entsprechenden Form gebracht, der Formling nach Härten des Harzanteils in eine mehrteilige Aluminiumform formschlüssig eingelegt und mit der Form verklebt wird und die Teile der Form zu einem den Formling flüssigkeitsdicht umschließenden Mantel verbunden werden.

## Claims

1. Connecting rod formed of a composite material with a flange formed from the reinforcing fibres, characterised in that

a) the flange is coiled in the form of an endless loop,

b) the endless loop possesses a constant cross-sectional area and varying cross-sectional form over the extent of the fibres,

c) the flange is enclosed in a covering of aluminium.

2. Connecting rod according to claim 1, characterised in that the flange is formed in a U-shape and the free limbs possess eye-shaped passages.

3. Connecting rod according to claims 1 and 2, characterised in that carbon fibres are used as reinforcing fibres.

4. Connecting rod according to claims 1 to 3, characterised in that the inner fibres are glass fibres and the outer fibres are carbon fibres.

5. Connecting rod according to claims 1 to 4, characterised in that the aluminium possesses a varying wall thickness over the length of the connecting rod.

6. Connecting rod according to claims 1 to 5, characterised in that the aluminium covering consists of two parts connected together in fluid-tight manner.

7. Process for the production of a connecting rod according to claims 1 to 6, characterised in that reinforcing fibres covered with a hardenable synthetic resin are coiled in the form of an endless loop on a coiling core, the looped body is brought by pressing into a shape corresponding to the cross-sectional form of the connecting rod, the blank is inserted form-lockingly into a multiple part aluminium mould after hardening of the resin component and becomes bonded with the mould and the parts of the mould are connected to the mould as a covering encasing the blank in fluid-tight manner.

**Revendications**

1. Bielle en un matériau composite avec une ceinture formée par les fibres de renforcement, caractérisée en ce que :

a) la ceinture est enroulée sous forme d'une boucle sans fin,

b) la boucle san fin présente, sur l'étendue des fibres, une surface de section constante et des formes de section variables,

c) la ceinture est entourée par une enveloppe en aluminium.

2. Bielle selon la revendication 1, caractérisée en ce que la ceinture est agencée en forme de U et que les branches libres présentent des passages en forme d'oeil.

3. Bielle selon les revendications 1 et 2, caractérisée en ce qu'on utilise des fibres de carbone en tant que fibres de renforcement.

4. Bielle selon les revendications 1 à 3, caractérisée en ce que les fibres intérieures sont des fibres de verre et les fibres extérieures sont des fibres de carbone.

5. Bielle selon les revendications 1 à 4, caractérisée en ce que l'enveloppe présente une épaisseur de paroi variable sur la longueur de la bielle.

6. Bielle selon les revendications 1 à 5, caractérisée en ce que l'enveloppe en aluminium est constituée par plusieurs parties assemblées entre elles de façon étanche aux liquides.

7. Procédé pour fabriquer une bielle suivant les revendications 1 à 6, caractérisé en ce que des fibres de renforcement revêtues d'une résine synthétique durcissable sont enroulées en forme de boucle sans fin sur un noyau d'enroulement, le corps enroulé est amené par pressage dans une forme correspondant à la forme de section de la bielle, l'ébauche est introduite, après durcissement de la résine composante, en liaison de forme dans une coquille en aluminium en plusieurs parties et assemblée par collage avec la coquille et les parties de la coquille sont assemblées en une enveloppe entourant l'ébauche de façon étanche aux liquides.

**Fig.1**

**Fig.2**

*Fig. 3*

*Fig. 4*